(19) Europäisches Patentamt
European Patent Office
Office européen des brevets

(11) Veröffentlichungsnummer: **0 097 119**
**A2**

# (12) EUROPÄISCHE PATENTANMELDUNG

(21) Anmeldenummer: **83810241.6**

(22) Anmeldetag: **06.06.83**

(51) Int. Cl.³: **C 09 B 62/02**, D 06 P 3/10, D 06 P 3/66

(30) Priorität: **11.06.82 CH 3638/82**

(43) Veröffentlichungstag der Anmeldung: **28.12.83 Patentblatt 83/52**

(84) Benannte Vertragsstaaten: **CH DE FR GB IT LI**

(71) Anmelder: **CIBA-GEIGY AG, Patentabteilung Postfach, CH-4002 Basel (CH)**

(72) Erfinder: **Seitz, Karl, Dr., Schützenweg 9, CH-4104 Oberwil (CH)**

## (54) Reaktivfarbstoffe, deren Herstellung und Verwendung.

(57) Reaktivfarbstoffe der Formel

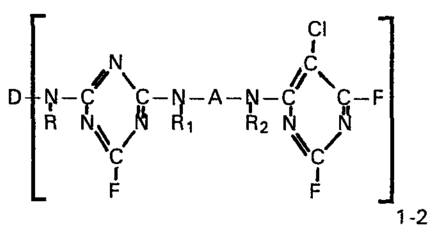

(1)

worin D der Rest eines organischen Farbstoffes, R, $R_1$ und $R_2$ unabhängig voneinander Wasserstoff oder gegebenenfalls substituiertes $C_{1-4}$-Alkyl, und A ein gegebenenfalls substituiertes aliphatisches oder aromatisches Brückenglied ist, eignen sich zum Färben und Bedrucken cellulosehaltiger und stickstoffhaltiger Fasermaterialien.

EP 0 097 119 A2

Reaktivfarbstoffe, deren Herstellung und Verwendung.

Reaktivfarbstoffe werden seit langem in grossem Umfang für das Färben und Bedrucken von Textilien aus Fasermaterialien eingesetzt, und es steht heute eine grosse Anzahl von brauchbaren Reaktivfarbstoffen mit unterschiedlichen Eigenschaften und für verschiedene Anwendungsbereiche zur Verfügung. Angesichts der immer höheren Anforderungen an Reaktivfärbungen in bezug auf Wirtschaftlichkeit, Applikationstechnik und Echtheitsniveau ist der erreichte technische Stand aber vielfach nicht voll befriedigend. Besonders die Fixierausbeute ist bei vielen Reaktivfarbstoffen ungenügend.

So ist häufig festzustellen, dass der Fixiergrad zu gering, und die Differenz zwischen Ausziehgrad und Fixiergrad zu gross ist (hoher Seifverlust), so dass ein erheblicher Teil des Reaktivfarbstoffes für den Färbevorgang verloren geht. Die Bereitstellung von verbesserten Reaktivfarbstoffen ist somit erwünscht. Der vorliegenden Erfindung lag daher die Aufgabe zugrunde, neue Reaktivfarbstoffe zu finden, die eine hohe Reaktivität besitzen, die mit hoher Fixierausbeute gefärbt werden können, und die vor allem für das Ausziehfärbeverfahren, insbesondere bei niedrigen Färbetemperaturen, und für das Kaltverweilverfahren geeignet sind. Es hat sich gezeigt, dass die weiter unten definierten neuen Reaktivfarbstoffe die gestellte Aufgabe weitgehend erfüllen.

Gegenstand der Erfindung sind Reaktivfarbstoffe der Formel

0097119



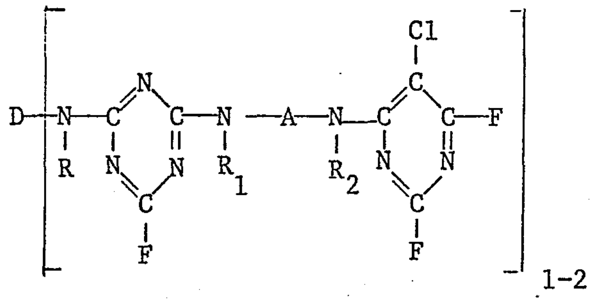

(1) ,

worin D der Rest eines organischen Farbstoffes, R, $R_1$ und $R_2$ unabhängig voneinander Wasserstoff oder gegebenenfalls substituiertes $C_{1-4}$-Alkyl, und A ein gegebenenfalls substituiertes aliphatisches oder aromatisches Brückenglied ist.

Der Rest D ist insbesondere der Rest eines sulfogruppenhaltigen organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbonimid-Reihe.

An den Farbstoffrest D in Formel (1) können 1 oder 2 bireaktive Fluortriazin-Fluorchlorpyrimidin-Gruppierungen gebunden sein. Falls der Farbstoff 2 derartige Gruppierungen aufweist, sind diese unabhängig voneinander, sie können somit bezüglich der Reste R, $R_1$, $R_2$ oder A gleich oder verschieden sein.

Der Rest D in Formel (1) kann in der üblichen Art substituiert sein, insbesondere enthält der Rest D eine oder mehrere Sulfonsäuregruppen. Als Beispiele für weitere Substituenten am Rest D seien genannt Alkylgruppen mit 1 bis 4 Kohlenstoffatomen, wie Methyl, Aethyl, Propyl, Isopropyl und Butyl, Alkoxygruppen mit 1 bis 4 Kohlenstoffatomen, wie Methoxy, Aethoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom,

Sulfamoyl, Carbamoyl, Ureido, Hydroxy, Carboxy, Sulfomethyl und Sulfo. Diejenigen Reaktivfarbstoffe, worin D der Rest eines Azofarbstoffes ist, enthalten als Substituenten insbesondere Methyl, Aethyl, Methoxy, Benzoylamino, Amino, Acetylamino, Ureido, Sulfomethyl, Hydroxy, Carboxy, Halogen und Sulfo.

Als Alkylrest kommt für R, $R_1$ und $R_2$ in Formel (1) ein geradkettiger oder verzweigter Alkylrest in Betracht, der auch substituiert sein kann, z.B. durch Halogen, Hydroxy, Cyan oder Sulfo. Als Beispiele für R seien genannt: Methyl, Aethyl, Propyl, Isopropyl, Butyl, Isobutyl, sek.-Butyl, tert.-Butyl, β-Chloräthyl, β-Hydroxyäthyl, β-Hydroxybutyl, β-Cyanäthyl und Sulfomethyl.

Das aliphatische oder aromatische Brückenglied A ist vorzugsweise ein Alkylen- oder Arylenrest. Der Ausdruck aliphatisches Brückenglied schliesst auch cycloaliphatische Reste ein. So kann A ein langer (z.B. mit 10 oder mehr Kohlenstoffatomen) oder kürzerer, geradkettiger oder verzweigter Alkylenrest sein; insbesondere kommt ein Alkylenrest mit 2 bis 6 Kohlenstoffatomen in Betracht, z.B. Aethylen, Propylen, Butylen, Hexylen oder Cyclohexylen. Als Arylenrest ist A z.B. ein Naphthylenrest, der Rest eines Diphenyls oder Stilbens oder insbesondere ein Phenylenrest. Der Rest A kann weitere Substituenten enthalten, z.B. Halogenatome, wie Fluor, Chlor und Brom, Alkylgruppen mit 1 bis 4 Kohlenstoffatomen, wie Methyl, Aethyl und Propyl, Alkoxygruppen mit 1 bis 4 Kohlenstoffatomen, wie Methoxy, Aethoxy, Propyloxy und Isopropyloxy, Carboxy oder Sulfo. Vorzugsweise ist A $C_{2-6}$-Alkylen oder gegebenenfalls substituiertes Phenylen. Bevorzugt ist der Aethylenrest, der Phenylenrest und der Sulfophenylenrest.

Bevorzugte Untergruppen der Reaktivfarbstoffe der Formel (1) sind:

a) Reaktivfarbstoffe der Formel (1), worin D der Rest eines der genannten sulfogruppenhaltigen Farbstoffe, und R Wasserstoff, Methyl

oder Aethyl ist.

b) Reaktivfarbstoffe gemäss a), worin $R_1$ und $R_2$ unabhängig voneinander Wasserstoff, Methyl oder Aethyl, und A $C_{2-6}$-Alkylen oder gegebenenfalls substituiertes Phenylen ist

c) Reaktivfarbstoffe gemäss b), der Formel

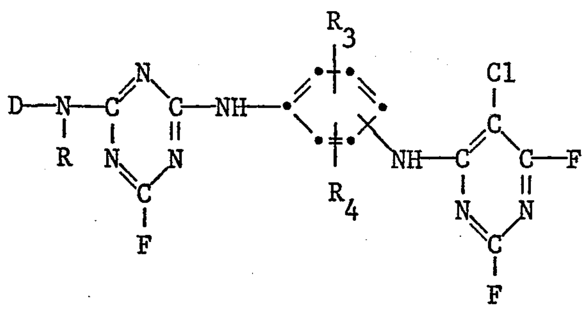

(2),

worin D und R die gleichen Bedeutungen haben wie unter b), und $R_3$ und $R_4$ unabhängig voneinander Wasserstoff, Methyl, Aethyl, Methoxy, Aethoxy, Chlor, Carboxy oder Sulfo ist.

d) Reaktivfarbstoffe gemäss c), worin D und R die gleichen Bedeutungen haben wie unter c), und $R_3$ und $R_4$ unabhängig voneinander Wasserstoff oder Sulfo ist.

e) Reaktivfarbstoffe gemäss a) bis d), worin D der Rest eines Mono- oder Disazofarbstoffes ist.

f) Reaktivfarbstoffe gemäss a) bis d), worin D der Rest eines Metallkomplexazo- oder Formazanfarbstoffes ist.

g) Reaktivfarbstoffe gemäss a) bis d), worin D der Rest eines Anthrachinon- oder Phthalocyaninfarbstoffes ist.

h) Reaktivfarbstoffe gemäss f), worin D der Rest eines Metallkomplexazofarbstoffes der Benzol- oder Naphthalinreihe ist.

i) Reaktivfarbstoffe gemäss h), worin D der Rest eines 1:1-Kupferkomplexazofarbstoffes der Benzol- oder Naphthalinreihe ist, und das Kupferatom an jeweils eine metallisierbare Gruppe in ortho-Position zur Azobindung gebunden ist.

j) Reaktivfarbstoffe gemäss e), der Formel

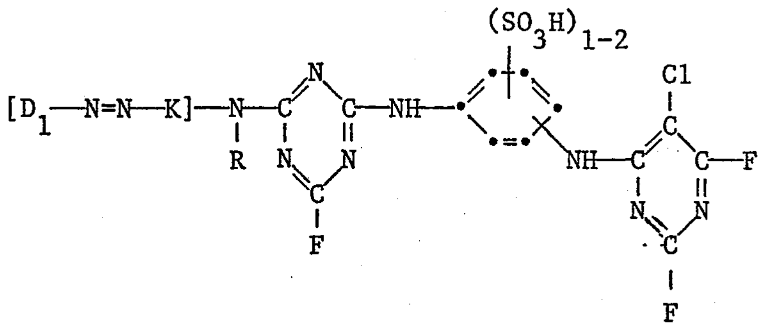

(3) ,

worin $D_1$ der Rest einer Diazokomponente der Benzol- oder Naphthalinreihe, K der Rest einer Kupplungskomponente der Benzol- oder Naphthalinreihe oder der heterocyclischen Reihe, und R Wasserstoff oder Methyl ist, und der Reaktivrest an die Diazokomponente oder an die Kupplungskomponente gebunden ist.

Die Farbstoffe der Formel (1) sind faserreaktiv.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Herstellung der Reaktivfarbstoffe der Formel (1) ist dadurch gekennzeichnet, dass man einen organischen Farbstoff der Formel

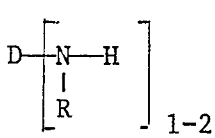

(4)

oder ein Farbstoffvorprodukt, 2,4,6-Trifluor-s-triazin, eine Ver-

bindung der Formel

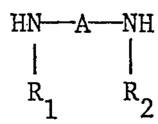

(5)

und 2,4,6-Trifluor-5-chlorpyrimidin kondensiert, wobei D, R, $R_1$, $R_2$ und A in den oben genannten Formeln die unter Formel (1) angegebenen Bedeutungen haben, und dass man im Falle der Verwendung von Farbstoffvorprodukten, die erhaltenen Zwischenverbindungen in die gewünschten Endfarbstoffe umwandelt.

Bei dem im vorangehenden beschriebenen Verfahren können die einzelnen Verfahrensschritte in unterschiedlicher Reihenfolge, gegebenenfalls teilweise auch gleichzeitig, ausgeführt werden. Dabei sind verschiedene Verfahrensvarianten möglich. Im allgemeinen führt man die Umsetzung schrittweise nacheinander aus.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Wichtige Verfahrensvarianten sind dadurch gekennzeichnet, dass man:

1. einen organischen Farbstoff der Formel (4) mit 2,4,6-Trifluor-s-triazin kondensiert, dass man ferner eine Verbindung der Formel (5) mit 2,4,6-Trifluor-5-chlorpyrimidin kondensiert, und beide Zwischenprodukte miteinander kondensiert;

2. einen organischen Farbstoff der Formel (4) mit 2,4,6-Trifluor-s-triazin kondensiert, das primäre Kondensationsprodukt mit einer Verbindung der Formel (5) kondensiert, und das erhaltene sekundäre Kondensationsprodukt mit 2,4,6-Trifluor-5-chlorpyrimidin kondensiert;

3. eine Verbindung der Formel (5) mit 2,4,6-Trifluor-5-chlorpyrimidin kondensiert, das primäre Kondensationsprodukt mit 2,4,6-Trifluor-s-triazin kondensiert, und das entstandene Zwischenprodukt mit einem organischen Farbstoff der Formel (4) kondensiert;

4. 2,4,6-Trifluor-s-triazin mit einer Verbindung der Formel (5) kondensiert, das primäre Kondensationsprodukt mit einem organischen Farbstoff der Formel (4) kondensiert, und das erhaltene sekundäre Kondensationsprodukt in letzter Stufe mit 2,4,6-Trifluor-5-chlorpyrimidin kondensiert.

Diejenigen Reaktivfarbstoffe der Formel (1), worin D der Rest eines aus zwei oder mehr als zwei Komponenten zusammengesetzten organischen Farbstoffes ist, können auch nach einer Verfahrensvariante hergestellt werden, bei welcher man von Farbstoffvorprodukten ausgeht. Das geschieht in der Weise, dass man eine Komponente des Farbstoffes der Formel (4), die eine Gruppe -N(R)H enthält, und 2,4,6-Trifluor-s-triazin kondensiert, und in einer geeigneten Stufe des Verfahrens, gegebenenfalls auch vorher, mit einer Verbindung der Formel (5) und mit der anderen (bzw. den übrigen) Komponente(n) des Farbstoffs der Formel (4) und 2,4,6-Trifluor-5-chlorpyrimidin umsetzt.

Beispiele für derartige, aus zwei oder mehr als zwei Komponenten zusammengesetzte organische Farbstoffe sind: Monoazo-, Disazo-, Trisazo-, Tetrazo-, Metallkomplexazo-, Formazan- und Azomethinfarbstoffe.

Die oben beschriebene Verfahrensvariante ist vor allem wichtig für die Herstellung von Reaktivfarbstoffen der Formel (1), worin D der Rest eines sulfogruppenhaltigen Azofarbstoffes ist. In diesen kann derjenige Teil des Azofarbstoffrestes, an den der Reaktivrest unmittelbar gebunden ist, der Rest der Diazokomponente oder der Rest der Kupplungskomponente sein. Dadurch ergeben sich zwei wichtige Ausführungsformen der oben beschriebenen Verfahrensvariante.

Die eine der beiden Varianten ist dadurch gekennzeichnet, dass man eine Diazokomponente des Farbstoffes, die eine Gruppe -N(R)H enthält, mit 2,4,6-Trifluor-s-triazin kondensiert, das erhaltene Kondensationsprodukt diazotiert und auf eine Kupplungskomponente kuppelt, und vor oder nach der Kondensation oder nach der Kupplung mit der Verbindung der Formel (5) und 2,4,6-Trifluor-5-chlorpyrimidin kondensiert.

Die zweite Variante ist dadurch gekennzeichnet, dass man eine Kupplungskomponente des Farbstoffs, die eine Gruppe -N(R)H enthält, mit 2,4,6-Trifluor-s-triazin kondensiert, und auf das so erhaltene Kondensationsprodukt eine diazotierte Diazokomponente kuppelt, und vor oder nach der Kondensation oder nach der Kupplung mit der Verbindung der Formel (5) und 2,4,6-Trifluor-5-chlorpyrimidin kondensiert.

Nach diesen Verfahrensvarianten können Reaktivfarbstoffe der Formel (1), die zwei Reaktivreste enthalten, hergestellt werden, indem man eine Diazokomponente, die eine Gruppe -N(R)H enthält, mit 2,4,6-Trifluor-s-triazin kondensiert, dass man ferner eine Kupplungskomponente, die eine Gruppe -N(R)H enthält, mit 2,4,6-Trifluor-s-triazin kondensiert und dass man das Kondensationsprodukt der Diazokomponente diazotiert und auf das Kondensationsprodukt der Kupplungskomponente kuppelt, wobei das R im Kondensationsprodukt der Diazokomponente unabhängig ist von dem R im Kondensationsprodukt der Kupplungskomponente, und dass man vor oder nach der Kupplung beide Triazinreste mit Verbindungen der Formeln (5) und 2,4,6-Trifluor-5-chlorpyrimidin kondensiert.

Farbstoffe der Formel (1), die zwei Reaktivreste enthalten, sind auch in der Weise herstellbar, dass man Farbstoffe der Formel (4) verwendet, die an D zwei Gruppen -N(R)H gebunden enthalten, diese mit einer entsprechenden Menge 2,4,6-Trifluor-s-triazin kondensiert, so dass zwei Fluortriazinreste in das Farbstoffmolekül eingeführt werden, und dann mit entsprechenden Mengen der Verbindungen der Formel (5) und 2,4,6-Trifluor-5-chlorpyrimidin kondensiert.

Falls die fertigen Reaktivfarbstoffe der Formel (1) komplexbildende Gruppen enthalten, können sie nachträglich mit schwermetallabgebenden Mitteln umgesetzt werden.

Die Kondensation des 2,4,6-Trifluor-s-triazins mit den organischen Farbstoffen der Formel (4) bzw. den eine Gruppe -N(R)H enthaltenden diazotierbaren und/oder kupplungsfähigen Komponenten erfolgen vorzugsweise in wässriger Lösung oder Suspensionen, bei niedrigen Temperaturen, vorzugsweise zwischen 0° und 5° C und bei schwach saurem, neutralem bis schwach alkalischem pH-Wert. Vorteilhaft wird der bei der Kondensation freiwerdende Fluorwasserstoff laufend durch Zugabe wässriger Alkalihydroxide, -carbonate oder -bicarbonate neutralisiert. Für die weitere Umsetzung der so erhaltenen Fluortriazinfarbstoffe bzw. für die Umsetzung des 2,4,6-Trifluor-s-triazins mit den Verbindungen der Formel (5) setzt man die freien Amine oder deren Salze, bevorzugt in Form des Hydrochlorids, ein. Die Umsetzung wird bei Temperaturen etwa zwischen 0 und 40° C, bevorzugt zwischen 5 und 25°C, unter Zusatz säurebindender Mittel, bevorzugt Natriumcarbonat, in einem pH-Bereich von 2 bis 8, bevorzugt 5 bis 6,5, durchgeführt.

Die Kondensation des Fluortriazins mit einer Verbindung der Formel (5) kann vor oder nach der Kondensation des Fluortriazins mit einem Farbstoff der Formel (4) geschehen. Die Kondensation des Fluortriazins mit einer Verbindung der Formel (5) erfolgt vorzugsweise in wässriger Lösung oder Suspension, bei niedriger Temperatur und bei schwach saurem bis neutralem pH-Wert. Auch hier wird der bei der Kondensation freiwerdende Fluorwasserstoff vorteilhafterweise durch laufende Zugabe von wässrigen Alkalihydroxiden, -carbonaten oder -bicarbonaten neutralisiert.

Die Kondensation der Verbindungen der Formeln (5) und 2,4,6-Trifluor-5-chlorpyrimidin erfolgen ebenfalls vorzugsweise in wässriger Lösung oder Suspension, bei niedrigen Temperaturen, und bei schwach saurem, neutralem bis schwach alkalischem pH-Wert, sowie

in Gegenwart eines säurebindenden Mittels.

Im folgenden sollen mögliche Ausgangsstoffe, die zur Herstellung der Reaktivfarbstoffe der Formel (1) verwendet werden können, einzeln genannt werden.

Als Farbstoffe der Formel (4) kommen besonders Farbstoffe der folgenden Strukturtypen in Betracht:

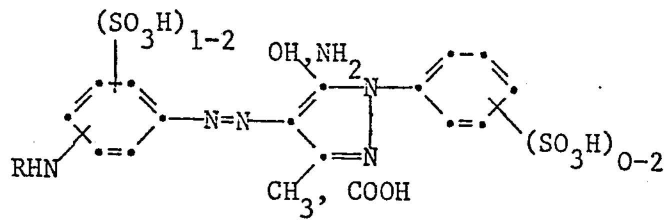

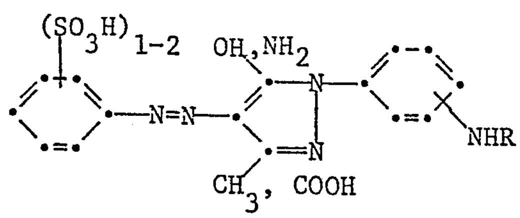

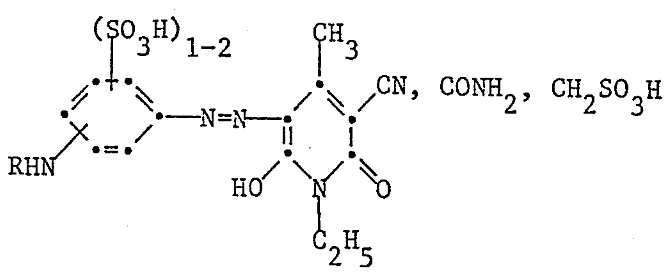

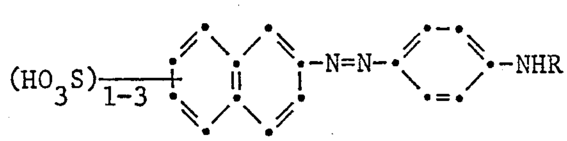

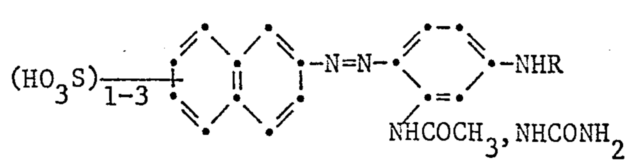

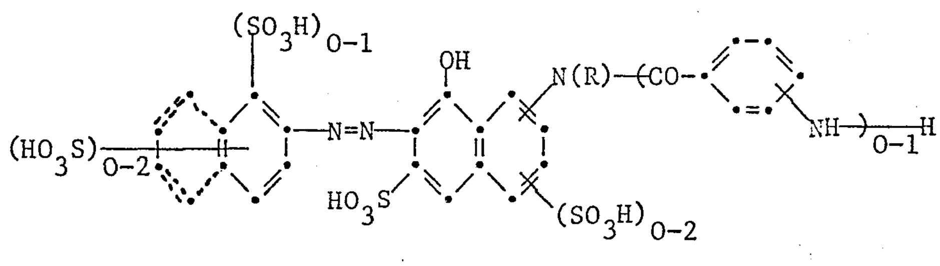

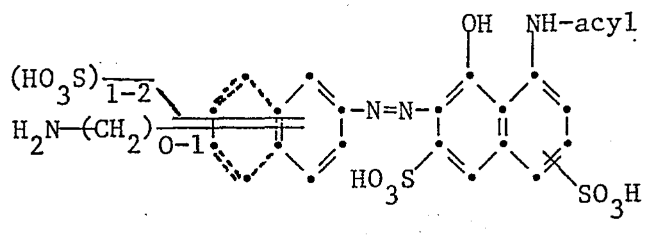

worin acyl z.B. Acetyl oder gegebenenfalls substituiertes Benzoyl ist.

Metallkomplexe von Farbstoffen der Formeln:

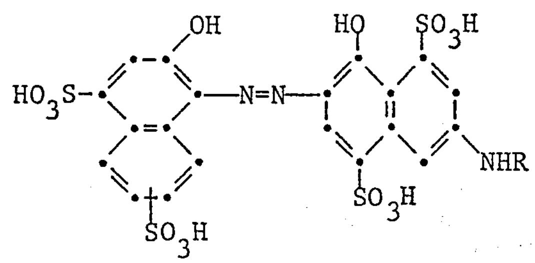

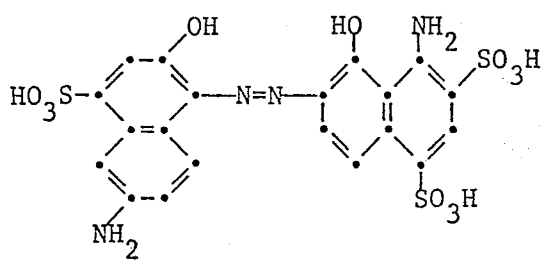

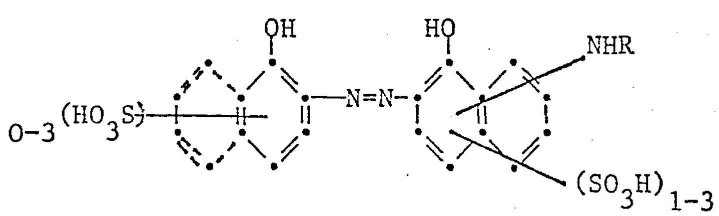

Als Metallatom sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Ligandengruppen unsymmetrisch aufgebaut sein.

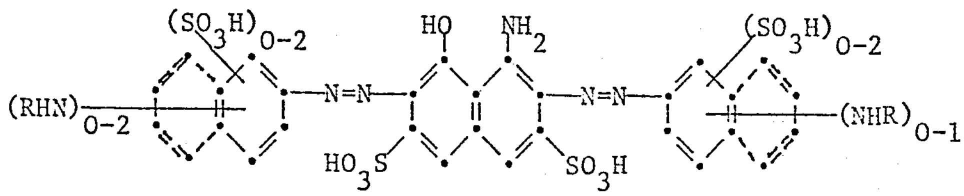

Die durch Strichelungen angedeuteten kondensierten Ringe stehen für alternativ mögliche Naphthalinsysteme.

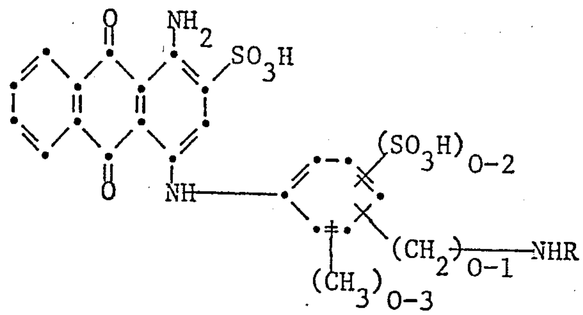

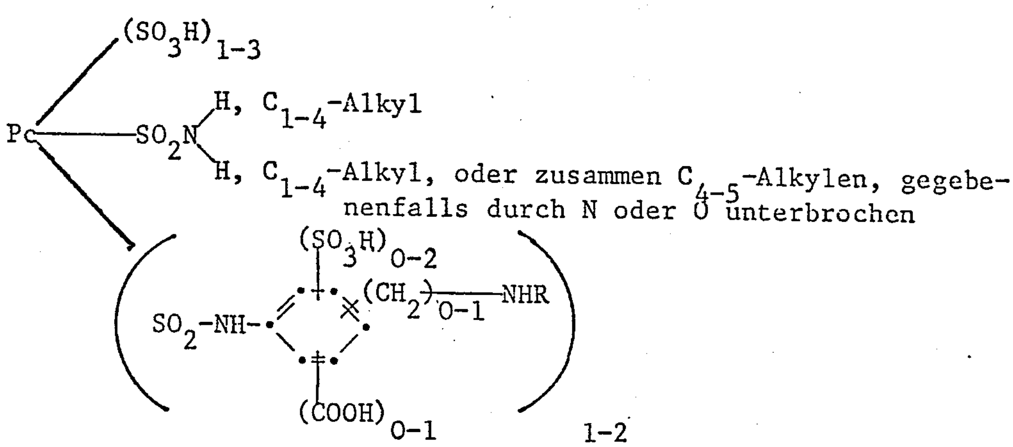


In dieser Formel steht Pc für den Cu- oder Ni-Phthalocyaninrest. Die Gesamtzahl der Substituenten am Pc-Gerüst ist dabei 4.

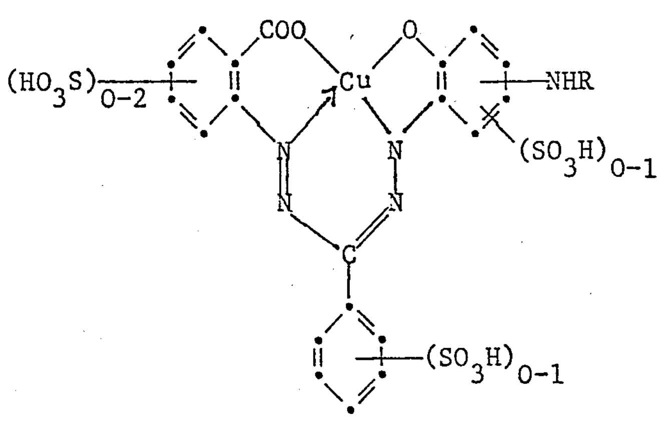

Die Farbstoffe der oben angegebenen Formeln können in den Alkyl- oder Arylresten weitersubstituiert sein, insbesondere durch die bei der Erläuterung von D in Formel (1) genannten Substituenten.

Besonders wichtige Azofarbstoffe der Formel (11) sind die folgenden:

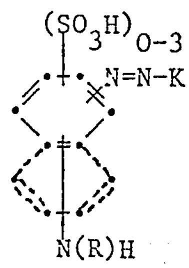

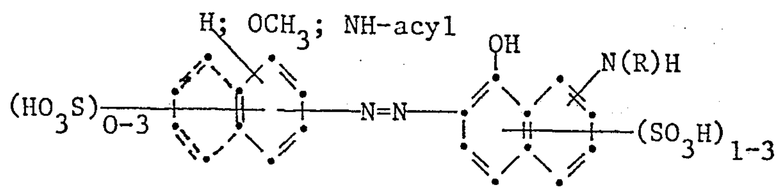

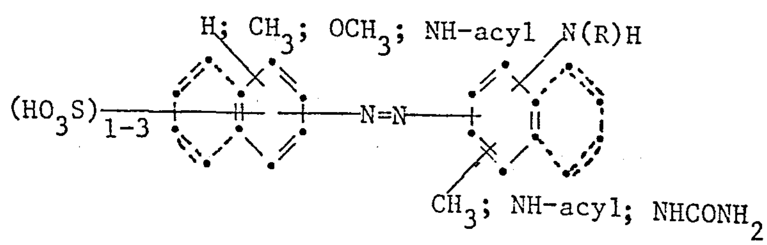

und

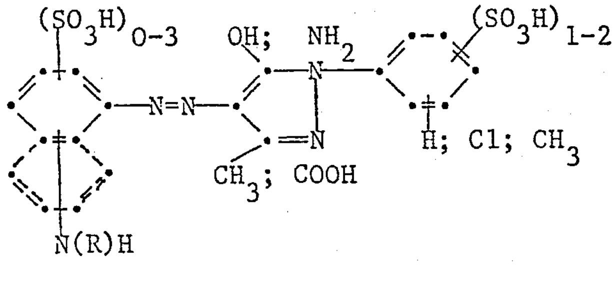

worin K der Rest einer Kupplungskomponente der Benzol-, Naphthalin- oder der heterocyclischen Reihe, acyl ein niedrigmolekularer, höchstens 3 Kohlenstoffatome enthaltender aliphatischer Acylrest oder ein höchstens 8 Kohlenstoffatome enthaltender aromatischer Rest ist, und R die bei der Erläuterung der Formel (1) angegebenen Bedeutungen hat, sowie die Metallkomplex-Azofarbstoffe der Formeln

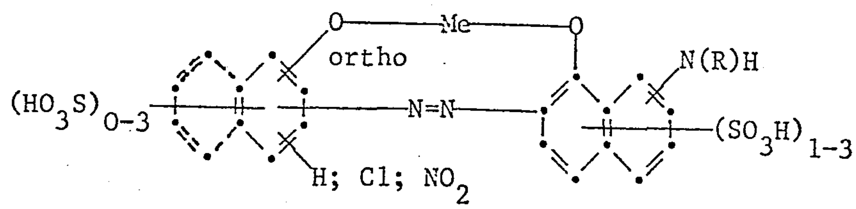

und

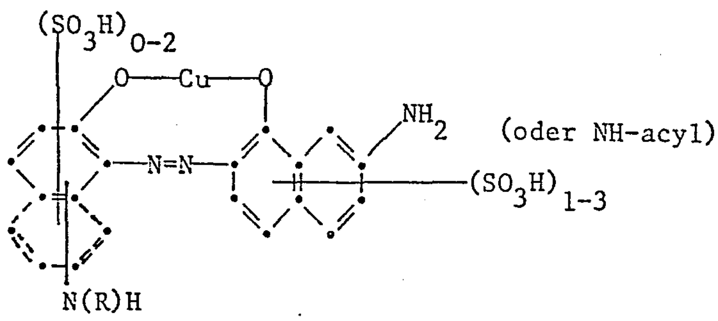

worin R und acyl die oben angegebenen Bedeutungen haben und Me für Cu, Cr oder Co steht.

Verbindungen der Formel (5): Methylendiamin, Aethylendiamin, n-Propylendiamin, n-Butylendiamin, 1-Methyl-n-propylendiamin, n-Hexylendiamin, 2-Aethyl-n-butylendiamin, 2-Hydroxy-n-propylendiamin, 1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminodiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxy-benzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4'-Diaminodiphenyloxid, 4,4'-Diaminodiphenylharnstoff-2,2'-disulfonsäure, 4,4'-Diaminodiphenyloxyäthan-2,2'-disulfonsäure, 4,4'-Diaminostilben-2,2'-disulfonsäure, 4,4'-Diaminodiphenyläthan-2,2'-disulfonsäure, Piperazin.

Geht man zur Herstellung der bevorzugten Reaktivfarbstoffe der Formel (1), worin D der Rest eines Azofarbstoffes ist, nicht von den fertigen Aminofarbstoffen, z.B. solchen die weiter vorn beschrieben sind, sondern von Farbstoffvorprodukten, d.h. den Diazo- und Kupplungskomponenten aus, kommen beispielsweise die folgenden in Betracht:

Diazokomponenten:
Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-äthylamid, -N,N-dimethylamid oder -N,N-diäthylamid, Dehydrothio-p-toluidin-sulfonsäure, 1-Amino-3-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfon-

säure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1,3-Diaminobenzol-4-sulfonsäure, 1,4-Diaminobenzol-3-sulfonsäure, 1,4-Diaminobenzol-2,5-disulfonsäure, 1-Amino-3- oder -4-nitrobenzol-6-sulfonsäure, 1-Aminonapthalin, 2- Aminonaphthalin, 1-Aminonapthalin-2-, -4-, -5-, -6-, -7- oder -8-sulfonsäure, 2-Aminonaphthalin-1-, -3-, -4-, -5-, -6-, -7- oder 8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxy-naphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure.

Kupplungskomponenten:

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6-oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder 4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-[2'])-3-methyl-5-pyrazolon,1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxypyridon-(2), 1-Aethyl-3-cyan- oder -3-chlor-4-methyl-6-hydroxypyridon-(2), 1-Aethyl-3-sulfomethyl-4-methyl-6-hydroxy-pyridon-(2), 2,4,6-Triamino-3-cyanpyridin, 2-(3'-Sulfophenylamino)-4,6-diamino-3-cyanpyridin, 2-(2'-Hydroxyäthylamino)-3-cyan-4-methyl-6-aminopyridin, 2,6-Bis-(2'-hydroxyäthylamino)-3-cyan-4-methylpyridin, 1-Aethyl-3-carbamoyl-4-methyl-6-hydroxypyridon-(2), 1-Aethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure.

Geht man von Farbstoffvorprodukten aus, muss mindestens eine der beiden Komponenten, die Diazokomponente oder die Kupplungskomponente eine acylierbare Aminogruppe aufweisen. Die Diazotierung der eine diazotierbare Aminogruppe enthaltenden Zwischenprodukte erfolgt in der Regel durch Einwirkung salpetriger Säure in wässrig-mineralsaurer Lösung bei tiefer Temperatur, die Kupplung bei schwach sauren, neutralen bis schwach alkalischen pH-Werten.

Die Reaktivfarbstoffe der Formel (1) eignen sich zum Färben und Bedrucken von verschiedensten Materialien, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich für das Ausziehverfahren, wobei mit Dreistufen-Färbeverfahren besonders gute Ergebnisse erzielt werden. Dabei ist eine Ausziehstufe bei neutralem pH-Wert gefolgt von zwei sich im pH-Wert und/oder Temperatur unterscheidenden alkalischen Fixierstufen. Ebenso eignen sie sich

zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf den Foulard aufgebracht wird und danach durch mehrstündiges Lagern bei Raumtemperatur fixiert wird.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Padsteam-Verfahren nur kurze Dämpfzeiten. Sie ergeben Färbungen mit guten Nass- und Lichtechtheiten und hoher Farbstärke und bemerkenswert hoher Faser-Farbstoff-Bindungsstabilität, sowohl in saurem als auch in alkalischem Bereich.

Die Reaktivfarbstoffe der Formel (1) eignen sich besonders zum Färben von Baumwolle nach den Ausziehfärbeverfahren, wobei die Differenz zwischen Ausziehgrad und Fixiergrad bemerkenswert klein, d.h. der Seifverlust sehr gering ist.

Die Reaktivfarbstoffe der Formel (1) eignen sich auch zum Druck, insbesondere auf Baumwolle, ebenso aber auch zum Bedrucken von stickstoffhaltigen Fasern, z.B. von Wolle, Seide oder Wolle enthaltenden Mischgeweben.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels zu unterwerfen.

Die Herstellung der Monoazo- oder Disazozwischenverbindungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile, und die Temperaturen sind in Celsiusgraden angegeben.

Beispiel 1: Zu einer neutralen Lösung von 75,2 Teilen m-Phenylendiaminsulfonsäure in 1500 Teilen Wasser werden bei 10° C im Laufe von 2 Stunden 104,4 Teile 2,4,6-Trifluor-5-chlorpyrimidin zugetropft. Nach beendeter Zugabe des Acylierungsmittels rührt man noch weitere 3 Stunden. Hierauf stellt man das Reaktionsgemisch mit 2-n Natriumhydroxydlösung auf pH 7 und isoliert das Kondensationsprodukt der Formel

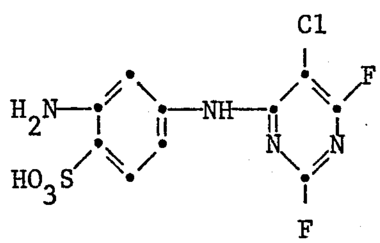

durch Einstreuen von 10 vol.% Kochsalz.

Zu einer eiskalten, neutralen Lösung von 10,09 Teilen des obigen Kondensationsproduktes in 200 Teilen Wasser werden im Laufe von 15 Minuten 3 Teile Cyanurfluorid eingetropft. Durch Zugabe von 1-n-Natriumhydroxydlösung hält man das pH des Reaktionsgemisches zwischen 6 und 7.

Die so erhaltene Lösung des Kondensationsproduktes der Formel

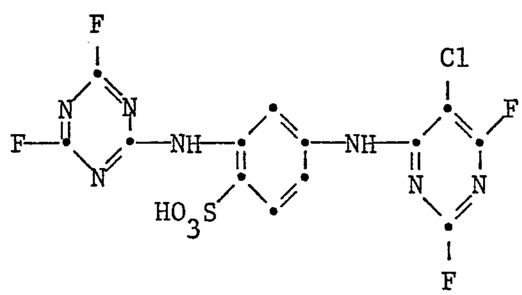

giesst man hierauf zu einer neutralen Lösung von 16,35 Teilen des Farbstoffes der Formel

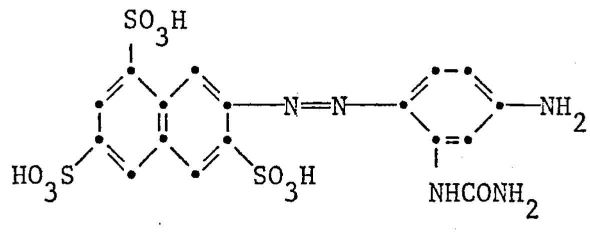

in 200 Teilen Wasser, erwärmt auf 30 bis 35° C und hält das pH durch Eintropfen von 1-n Natriumhydroxydlösung bei 8.

Nach erfolgter Umsetzung wird der bireaktive Farbstoff der Formel

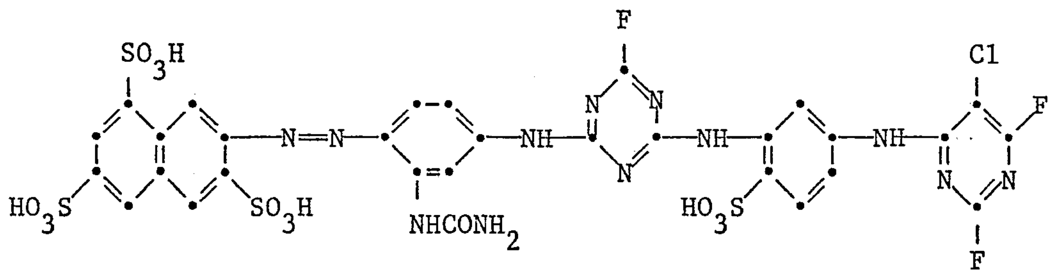

mit Kaliumchlorid ausgesalzen, abfiltriert, mit einer konz. wässrigen Lösung von 0,5 Teilen Dinatriumhydrogenphosphat gepuffert und im Vakuum bei ca. 50° C getrocknet.

Der so erhaltene Farbstoff färbt Baumwolle nach dem Kaltverweilverfahren in goldgelben Tönen.

Verwendet man an Stelle des obigen aminogruppenhaltigen Farbstoffes äquivalente Mengen der Farbstoffe in Kolonne I der folgenden Tabelle 1 und verfährt im übrigen nach den Angaben von Beispiel 1, so erhält man weitere bireaktive Farbstoffe, die Baumwolle in den in Kolonne II angegebenen Tönen färben.

Tabelle 1

| I | II |
|---|---|
| 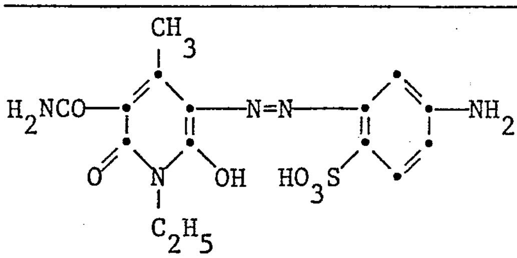 | grünstichig gelb |
| 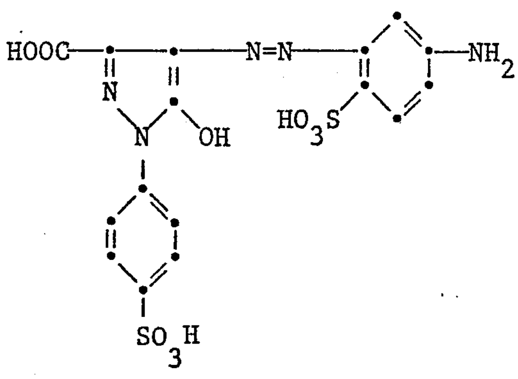 | grünstichig gelb |
| 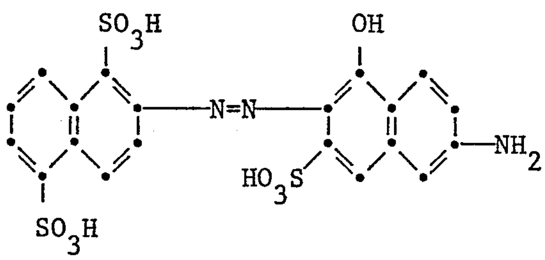 | orange |
| 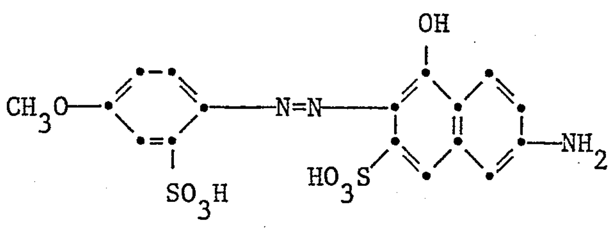 | scharlach |
| 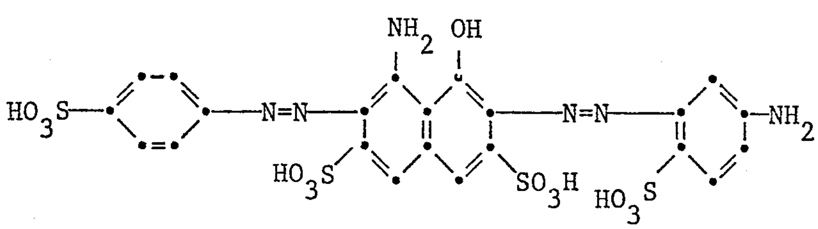 | marineblau |

Ersetzt man im Beispiel 1 die m-Phenylendiaminsulfonsäure durch die p-Phenylendiaminsulfonsäure und verfährt im übrigen nach den Angaben von Beispiel 1, so erhält man Farbstoffe mit sehr ähnlichen Eigenschaften.

<u>Beispiel 2:</u> Zu einer eiskalten, neutralen Lösung von 10,09 Teilen des Kondensationsproduktes der Formel

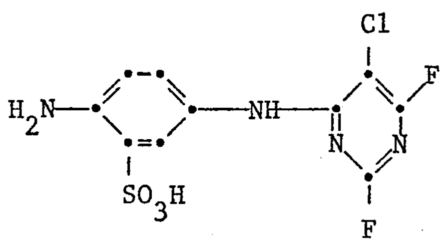

in 200 Teilen Wasser werden im Laufe von 15 Minuten 3 Teile Cyanurfluorid eingetropft. Durch Zugabe von 1-n Natriumhydroxydlösung hält man das pH des Reaktionsgemisches zwischen 6 und 7.

Die so erhaltene Lösung des Kondensationsproduktes der Formel

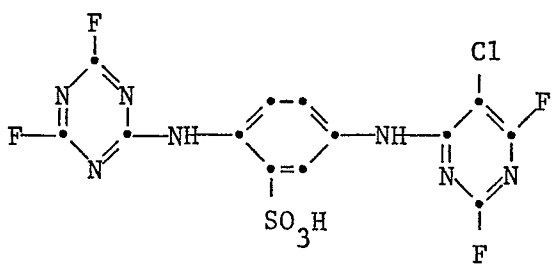

wird hierauf im Laufe von 30 Minuten zu einer Lösung von 9,57 Teilen 1-Amino-8-hydroxy-naphthalin-3,6-disulfonsäure zugetropft, währenddem das pH durch Zugabe von 1-n Natriumhydroxydlösung bei 5 gehalten wird.

Versetzt man eine bikarbonatalkalische Lösung der so erhaltenen Kupplungskomponente mit der aus 9,09 Teilen 2-Naphthylamin-1,5-disulfonsäure in üblicher Weise hergestellten Diazoverbindung, so erhält man einen bireaktiven Farbstoff der Formel

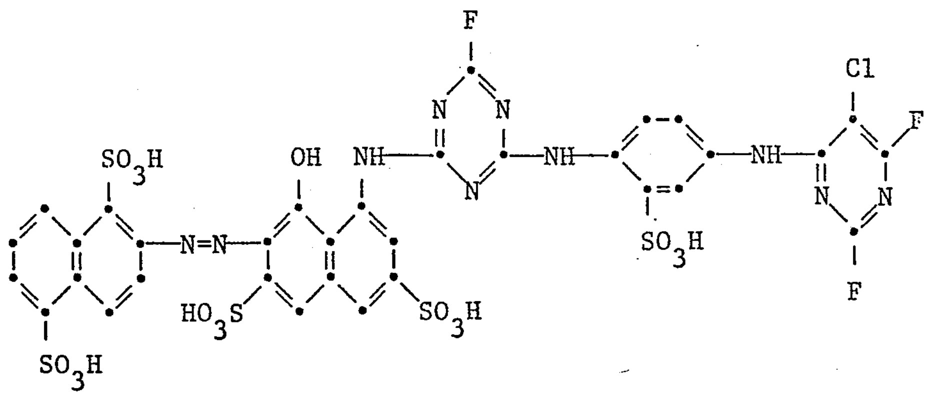

der Baumwolle in blaustichig roten Tönen färbt.

Kondensiert man die aminogruppenhaltigen Farbstoffe der Tabelle 2, Kolonne I, mit den heterobireaktiven Kondensationsprodukten von m- oder p-Phenylendiaminsulfonsäure, deren Herstellung in den Beispielen 1 und 2 beschrieben ist, so erhält man weitere Reaktivfarbstoffe, die Baumwolle in den in Kolonne II angegebenen Tönen färben.

Tabelle 2

| I | II |
| --- | --- |
| 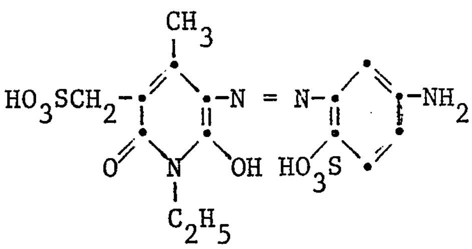 | grünstichig gelb |
| 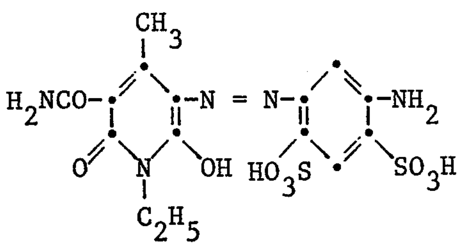 | grünstichig gelb |
| 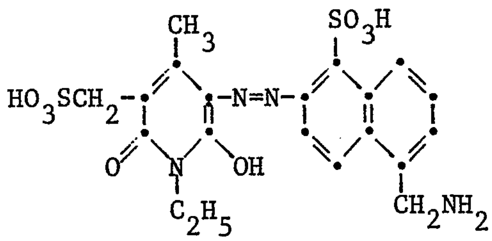 | gelb |
| 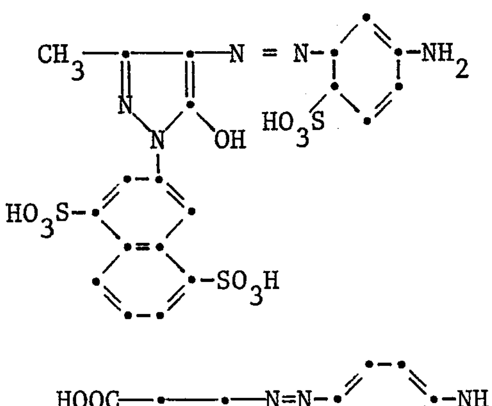 | gelb |
| 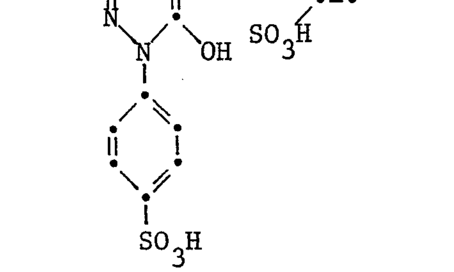 | gelb |

Tabelle 2 (Fortsetzung)

| I | II |
|---|---|
| 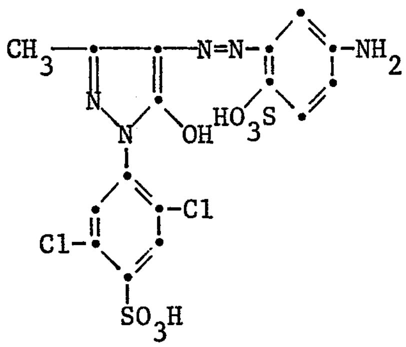 | grünstichig gelb |
| 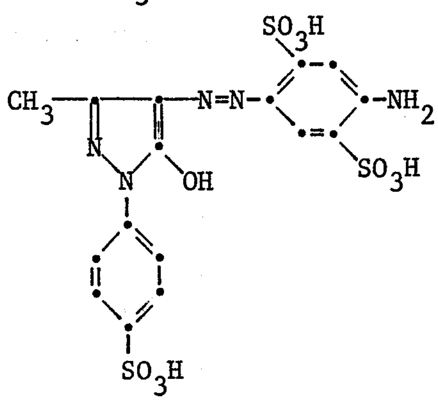 | gelb |
| 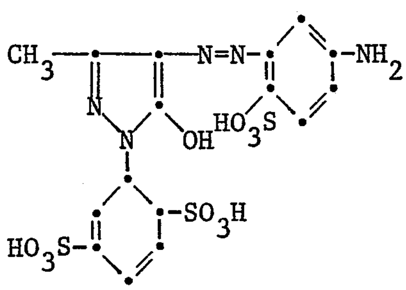 | grünstichig gelb |
| 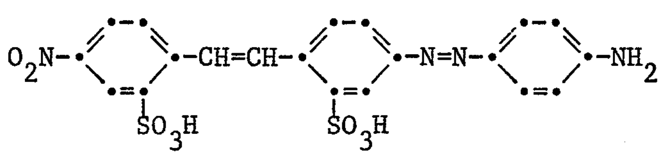 | gelb |
| 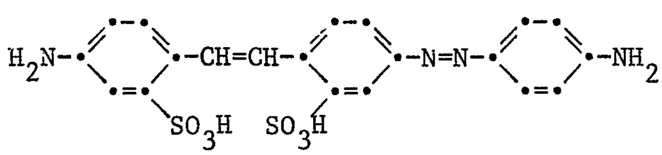 | gelb |
| 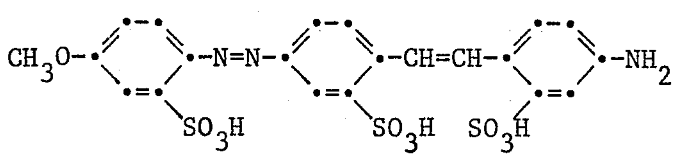 | gelb |

Tabelle 2 (Fortsetzung

| I | II |
| --- | --- |
| 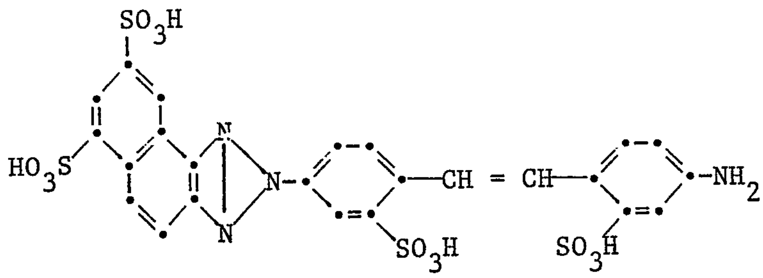 | gelb |
| 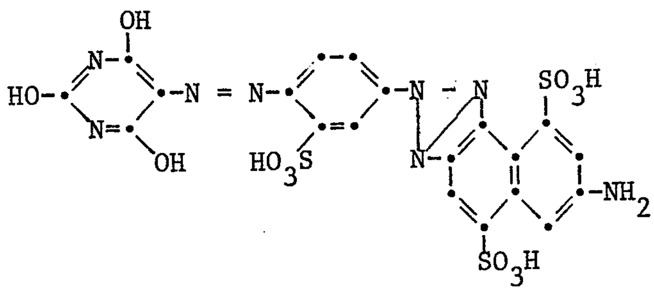 | grünstichig gelb |
| 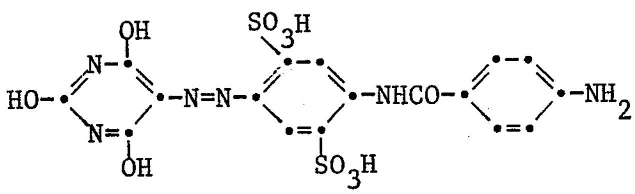 | grünstichig gelb |
| 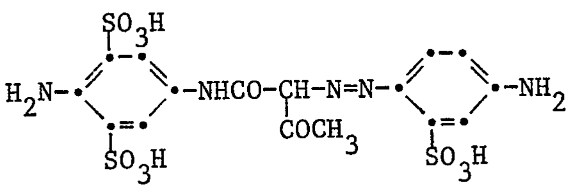 | gelb |
| 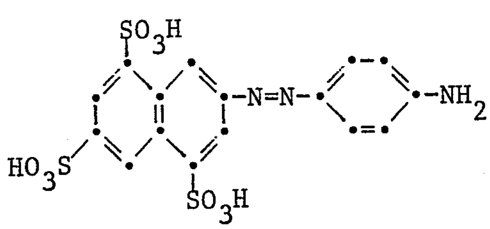 | gelb |
| 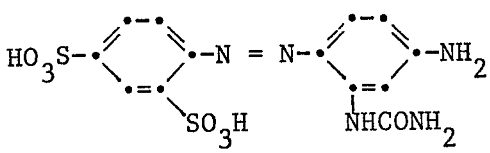 | gelb |

Tabelle 2 (Fortsetzung)

| I | II |
|---|---|
| 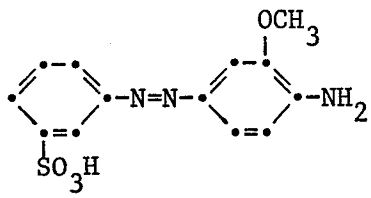 | gelb |
| 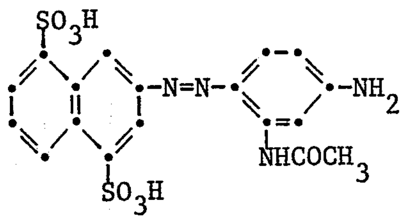 | gelb |
| 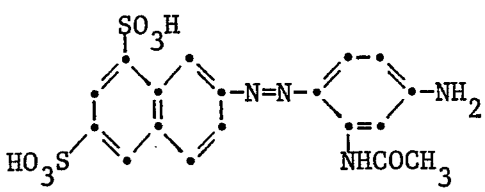 | gelb |
| 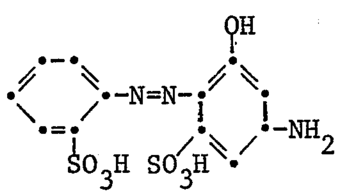 | orange |
| 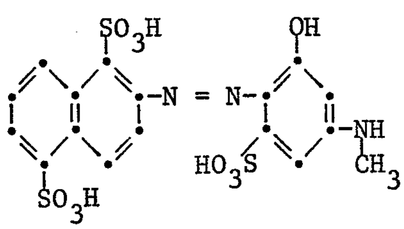 | orange |
| 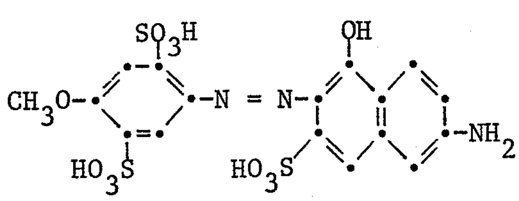 | Scharlach |

Tabelle 2 (Fortsetzung

| I | II |
|---|---|
| 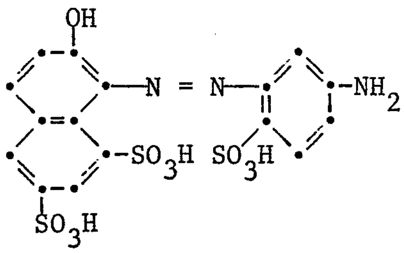 | orange |
| 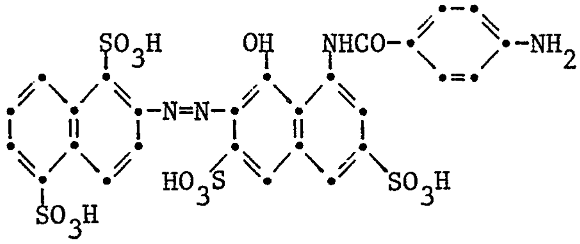 | blaustichig rot |
| 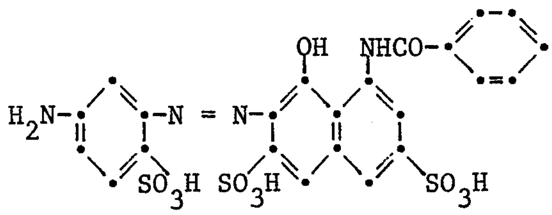 | blaustichig rot |
| 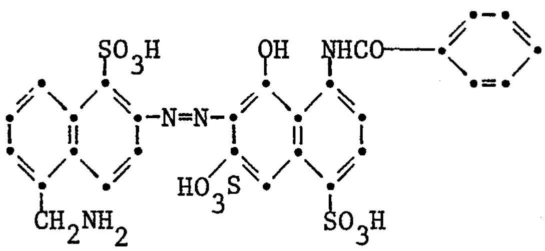 | blaustichig rot |
| 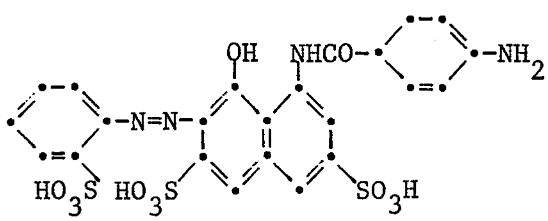 | rot |
| 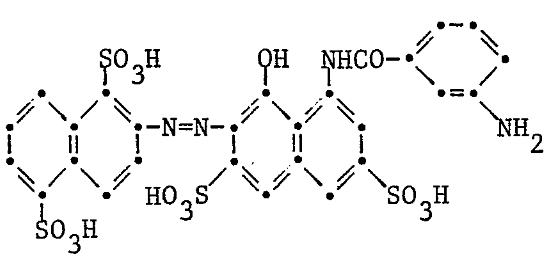 | blaustichig rot |

Tabelle 2 (Fortsetzung)

| I | II |
|---|---|
| 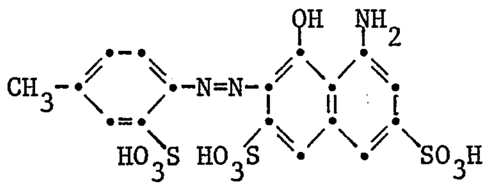 | blaustichig rot |
| 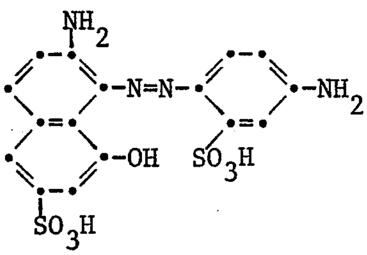 | blaustichig rot |
| 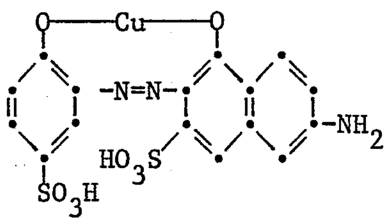 | rubin |
| 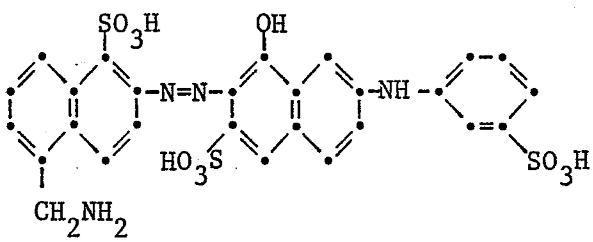 | braun |
| 1:2 Chromkomplex von 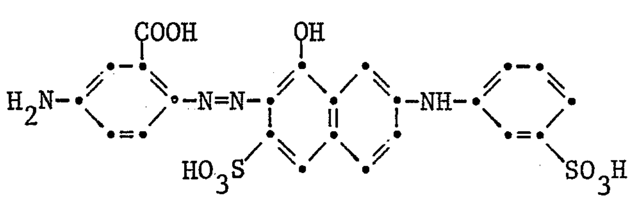 | braun |
| 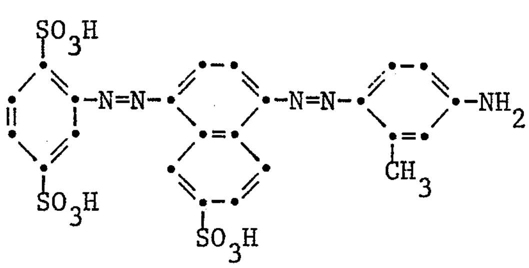 | braun |

Tabelle 2 (Fortsetzung)

| I | II |
|---|---|
| 1:2-Chromkomplex von | |
| 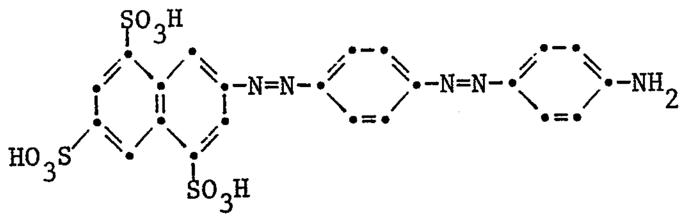 | braun |
| 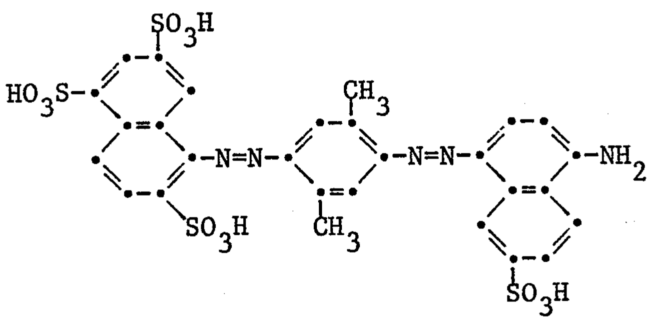 | braun |
| 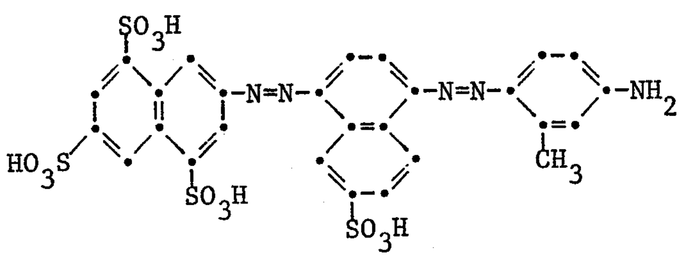 | braun |
| 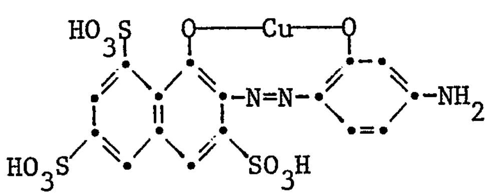 | violett |
| 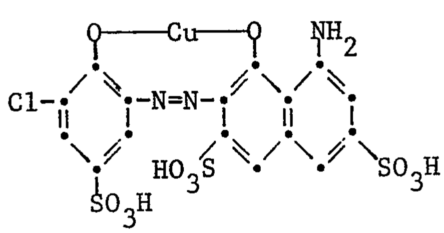 | violett |

Tabelle 2 (Fortsetzung)

| I | II |
|---|---|
| 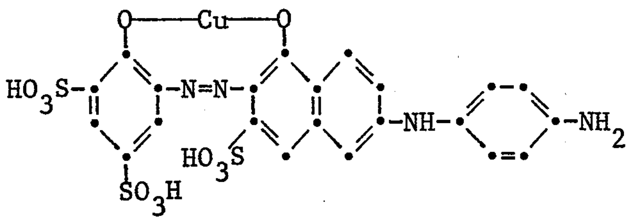 | violett |
| 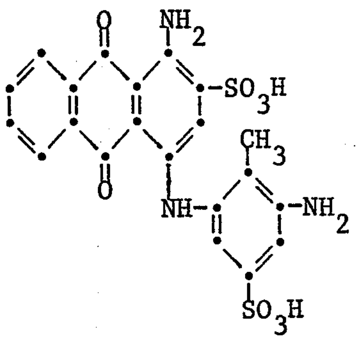 | blau |
| 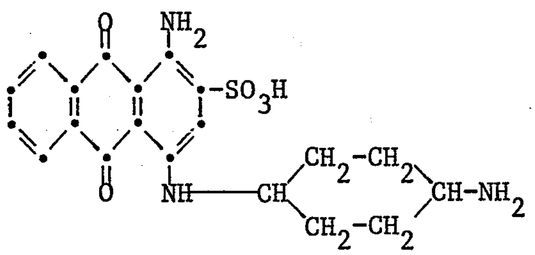 | blau |
| 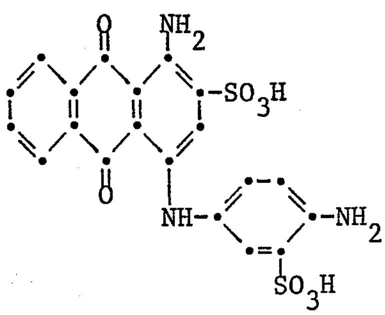 | blau |

Tabelle 2 (Fortsetzung)

| I | II |
|---|---|
| 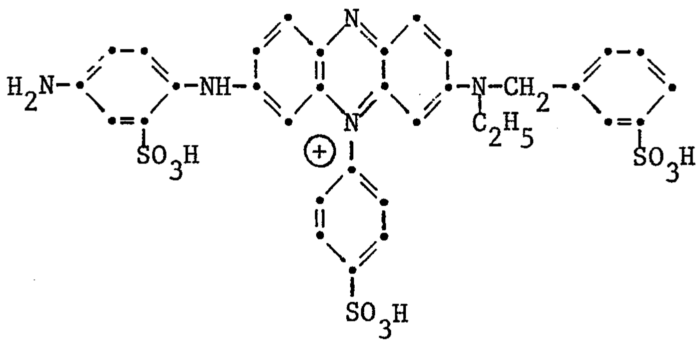 | rotstichig blau |
| 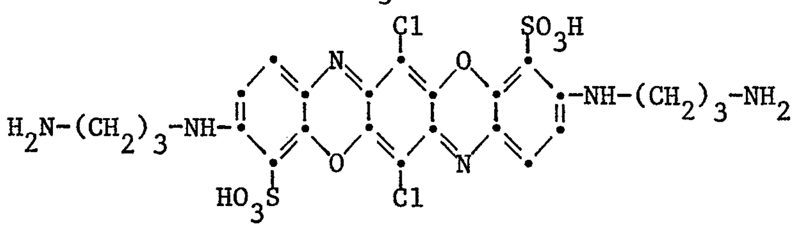 | rotstichig blau |
| 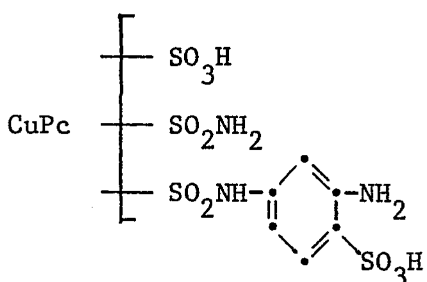 | türkis |
| 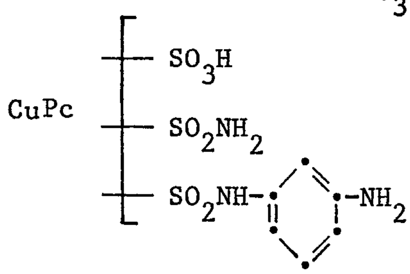 | türkis |
| 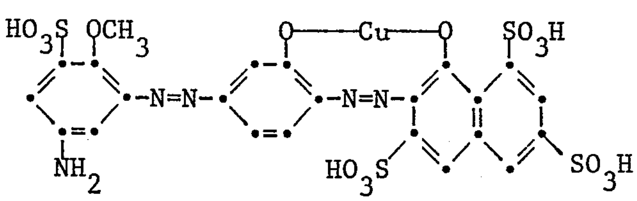 | blau |

Tabelle 2 (Fortsetzung)

| I | II |
|---|---|
| 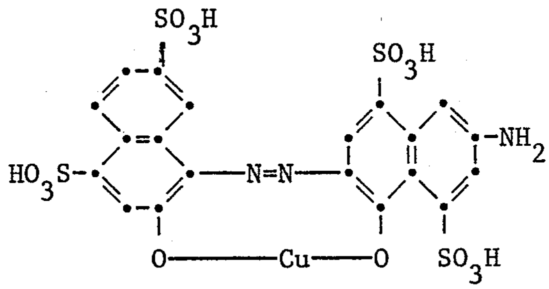 | blau |
| 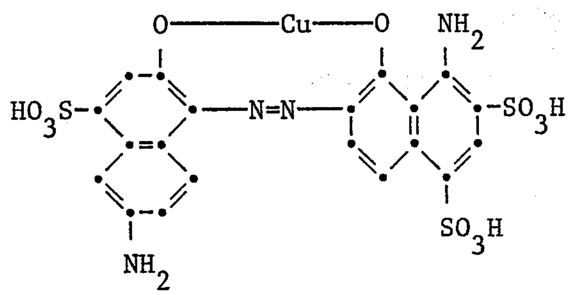 | blau |
| 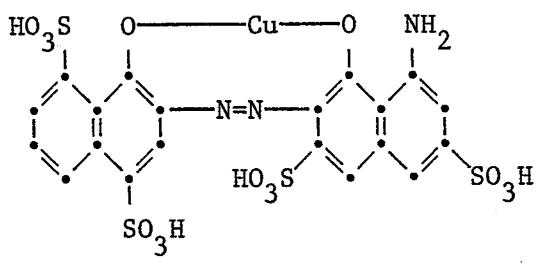 | blau |
| 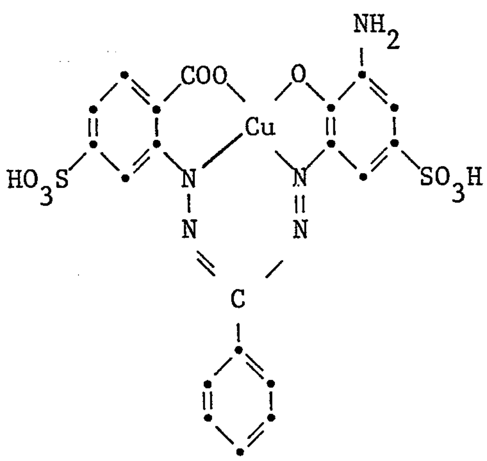 | blau |

Tabelle 2 (Fortsetzung)

| I | II |
|---|---|
| 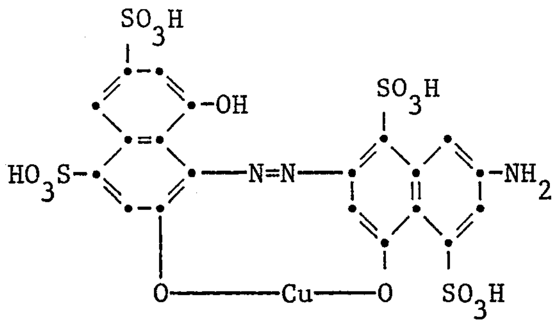 | blau |
| 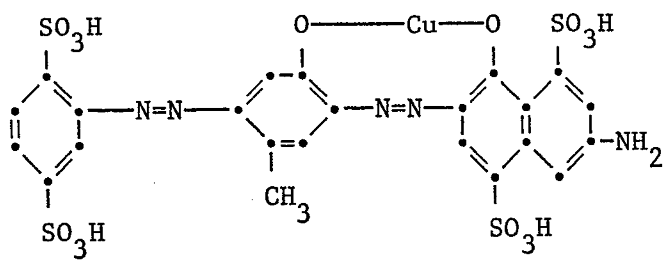 | marine |
| 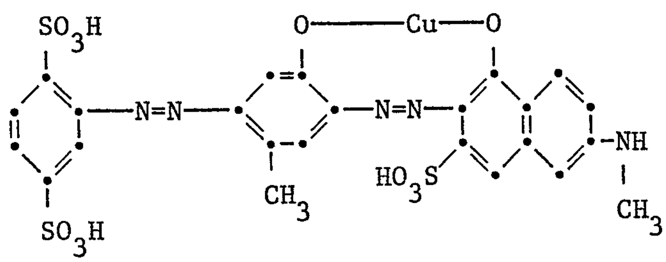 | marine |
| 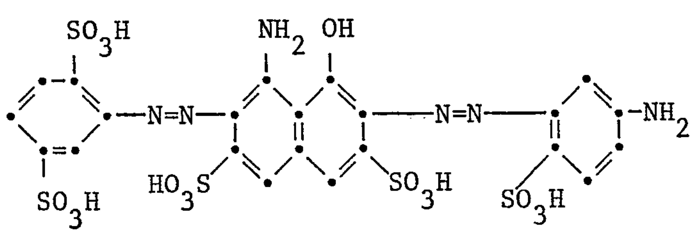 | marine |

Tabelle 2 (Fortsetzung)

| I | II |
|---|---|
| 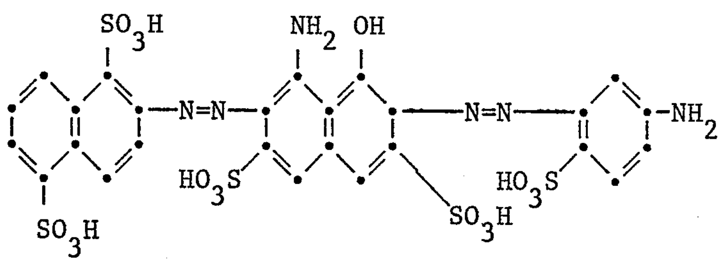 | grünstichig marine |
| 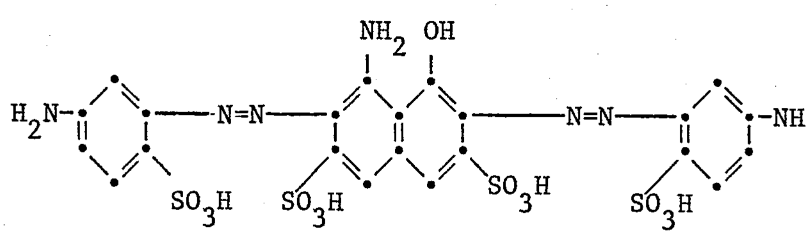 | marine |
| 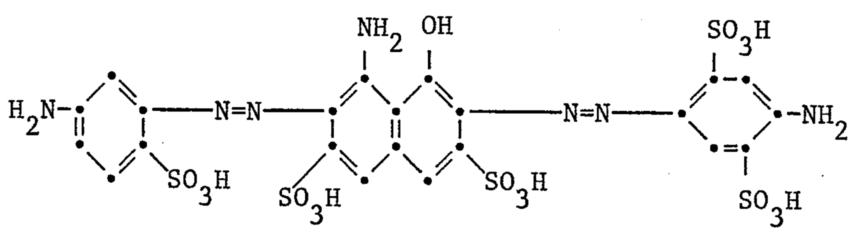 | marine |
| 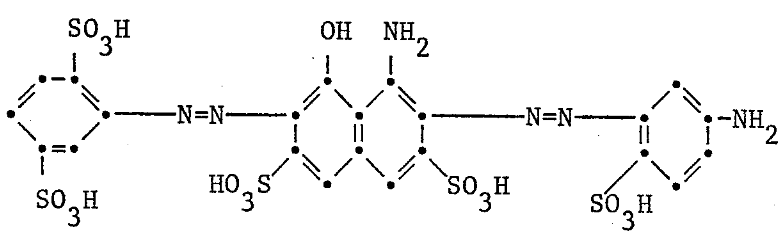 | marine |

Tabelle 2 (Fortsetzung)

| I | II |
| --- | --- |
| 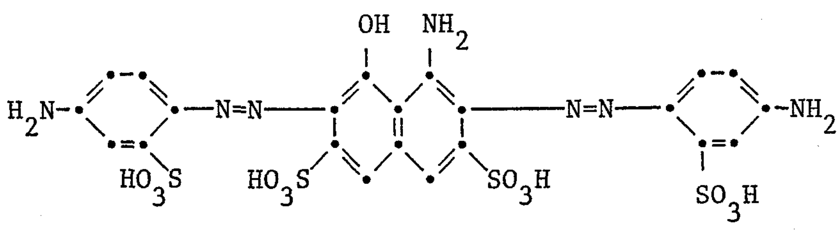 | grünstichtig marine |
| 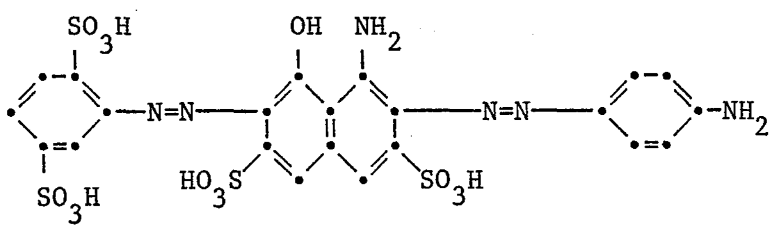 | marine |
| 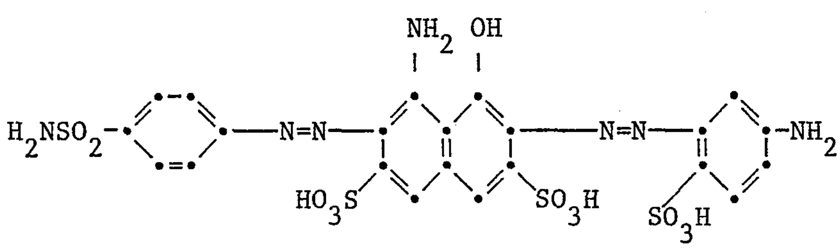 | marine |
| 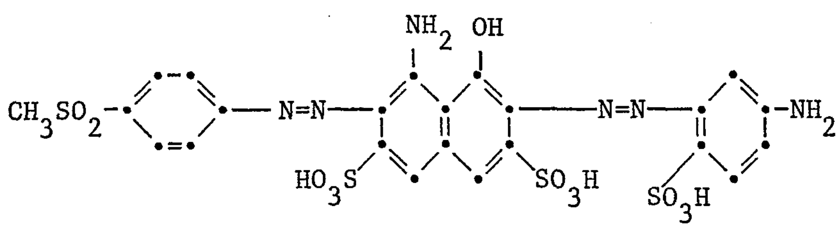 | marine |

Beispiel 3: In einer eiskalten, neutralen Lösung von 10,09 Teilen des Kondensationsproduktes der Formel

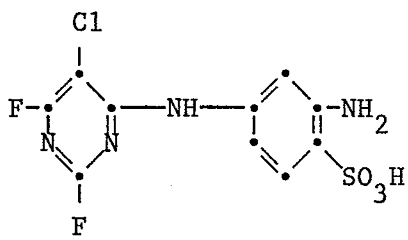

in 200 Teilen Wasser werden im Laufe von 15 Minuten 3 Teile Cyanurfluorid zugetropft. Durch gleichzeitige Zugabe von 1-n Natriumhydroxydlösung wird das pH des Reaktionsgemisches zwischen 6 und 7 gehalten.

Die Lösung wird hierauf mit einer neutralen Lösung von 5,64 Teilen m-Phenylendiaminsulfonsäure versetzt. Während der Kondensation wird das pH des Reaktionsgemisches durch Zutropfen von 1-n Natrimhydroxydlösung bei 7 gehalten.

Das so erhaltene Kondensationsprodukt der Formel

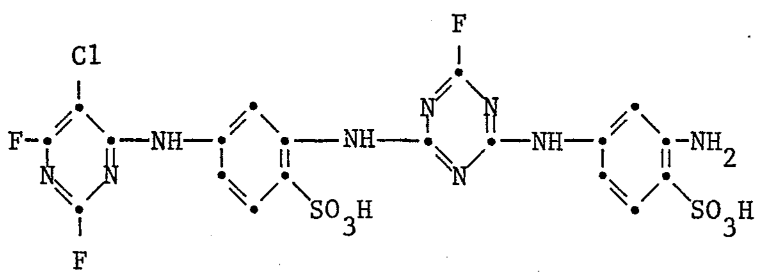

wird hierauf in üblicher Weise diazotiert und auf eine bikarbonatalkalische Lösung von 12,69 Teilen 1-Hydroxy-8-benzoylamino-naphthalin-3,6-disulfonsäure gekuppelt.

Man erhält einen Farbstoff, der Baumwolle in blaustichig roten Tönen färbt.

Beispiel 4: Zu einer neutralen Lösung von 107,2 Teilen 1,4-Penylendiamin-2,5-disulfonsäure in 2 000 Teilen Wasser werden bei Raumtemperatur im Laufe von 2 Stunden 104 Teile 2,4,6-Trifluor-5-chlorpyrimidin zugetropft. Durch gleichzeitige Zugabe von 2-n Natriumhydroxydlösung wird der pH-Wert der Lösung bei 7 gehalten. Wenn keine Lauge mehr aufgenommen wird, wird die trübe Lösung klärfiltriert und das Kondensationsprodukt der Formel

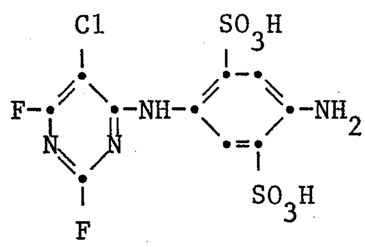

durch Zugabe von 25 Vol % Kochsalz isoliert.

12,5 Teile des obigen Kondensationsproduktes werden in 200 Teilen Wasser gelöst. Im Laufe von 10 Minuten werden 3 Teile Cyanurfluorid eingetropft und durch gleichzeitige Zugabe von 1-n Natrimhydroxydlösung wird der pH-Wert der Lösung zwischen 6 und 7 gehalten.

Das so erhaltene heterobireaktive Kondensationsprodukt der Formel

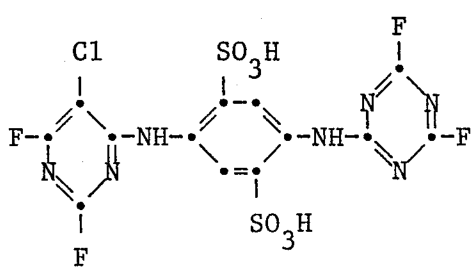

wird hierauf mit einer neutralen Lösung von 16,35 Teilen des aminogruppenhaltigen Farbstoffes der Formel

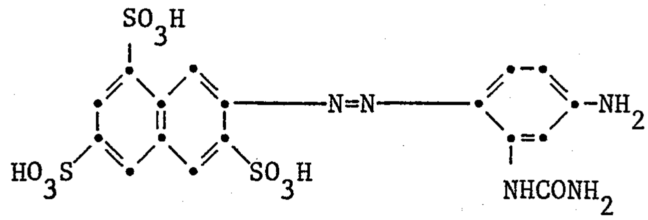

versetzt. Man erwärmt das Reaktionsgemisch auf 30-35°C und hält das pH mit 1-n Natriumhydroxydlösung bei 7 bis 8. Nach erfolgter Kondensation wird der gebildete Farbstoff mit 10 Vol % Kalimchlorid ausgesalzen, abfiltriert, mit einer wässerigen Lösung von 0,5 Teilen Dinatriumhydrogenphosphat gepuffert und im Vakuum bei 50°C getrocknet.

Der so erhaltene Farbstoff färbt Baumwolle nach dem Kaltverweilverfahren in goldgelben Tönen.

Verwendet man in Beispiel 4 anstelle von 1,4-Phenylendiamin-2,5-disulfonsäure eine entsrpechende Menge von 4-Methylamino-1-aminobenzol-3-sulfonsäure oder 1-(4'-Amino-2'-sulfophenyl)-piperazin oder 4-(β-Aminoäthylamino)-anilin-3-sulfonsäure und verfährt im übrigen nach den obigen Angaben, so erhält man einen ähnlichen Farbstoff, der Baumwolle ebenfalls in goldgelben Tönen färbt.

Färbevorschrift I

2 Teile des gemäss Beispiel 1 erhaltenen Farbstoffes werden unter Zusatz von 0,5 Teilen m-nitrobenzolsufonsaurem Natrium in 100 Teilen Wasser gelöst. Mit der erhaltenen Lösung wird ein Baumwollgewebe imprägniert, so dass es um 75 % seines Gewichts zunimmt, und dann getrocknet.

Danach imprägniert man das Gewebe mit einer 20°C warmen Lösung, die pro Liter 5 Gramm Natriumhydroxyd und 300 Gramm Natriumchlorid enthält, quetscht auf 75 % Gewichtszunahme ab, dämpft die Färbung während 30 Sekunden bei 100 bis 101° C spült, seift während einer Viertelstunde in einer 0,3 %igen kochenden Lösung eines ionenfreien Waschmittels, spült und trocknet.

Färbevorschrift II

2 Teile des gemäss Beispiel 1 erhältlichen Farbstoffes werden in 100 Teilen Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 40°C, wobei nach 30 Minuten 40 Teile kalziniertes Soda und nochmals 60 Teile Natriumchlorid zugegeben werden. Man hält die Temperatur 30 Minuten auf 40°C, spült und seift dann die Färbung während 15 Minuten in einer 0,3%igen kochenden Lösung eines ionenfreien Waschmittels, spült und trocknet.

Färbevorschrift III

4 Teile des gemäss Beispiel 2 erhaltenen Farbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird gespült, während einer Viertelstunde mit einem nichtionogenen Waschmittel kochend geseift, nochmals gespült und getrocknet.

Färbevorschrift IV

2 Teile des gemäss Beispiel 2 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb 20 Minuten auf 60°C erhöht. Die Temperatur

wird weitere 35 Minuten bei 60°C gehalten. Danach wird gespült, während einer Viertelstunde mit einem nichtionogenen Waschmittel kochend geseift nochmals gespült und getrocknet.

Patentansprüche

1. Reaktivfarbstoffe der Formel

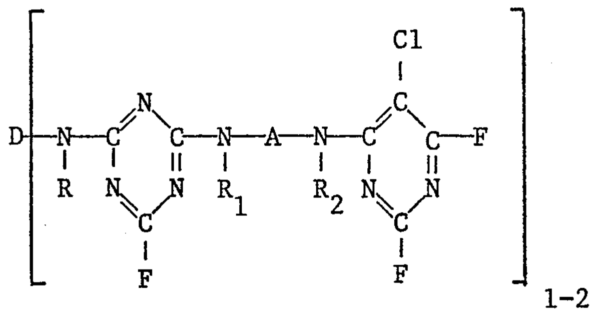

(1),

worin D der Rest eines organischen Farbstoffes, R, $R_1$ und $R_2$ unabhängig voneinander Wasserstoff oder gegebenenfalls substituiertes $C_{1-4}$-Alkyl, und A ein gegebenenfalls substituiertes aliphatisches oder aromatisches Brückenglied ist.

2. Reaktivfarbstoffe gemäss Anspruch 1, worin D der Rest eines sulfogruppenhaltigen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbonimid-Reihe ist.

3. Reaktivfarbstoffe gemäss Anspruch 2, worin R Wasserstoff, Methyl oder Aethyl ist.

4. Reaktivfarbstoffe gemäss Anspruch 3, worin $R_1$ und $R_2$ unabhängig voneinander Wasserstoff, Methyl oder Aethyl, und A $C_{2-6}$-Alkylen oder gegebenenfalls substituiertes Phenylen ist.

5. Reaktivfarbstoffe gemäss Anspruch 4, der Formel

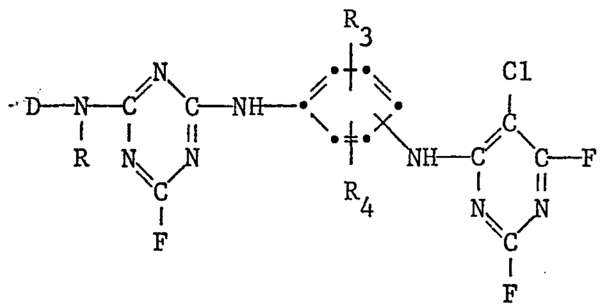

(2),

worin D und R die gleichen Bedeutungen haben wie in Anspruch 4, und $R_3$ und $R_4$ unabhängig voneinander Wasserstoff, Methyl, Aethyl, Methoxy, Aethoxy, Chlor, Carboxy oder Sulfo ist.

6. Reaktivfarbstoffe gemäss Anspruch 5, worin D und R die gleichen Bedeutungen haben wie in Anspruch 5, und $R_3$ und $R_4$ unabhängig voneinander Wasserstoff oder Sulfo ist.

7. Reaktivfarbstoffe gemäss Anspruch 6, worin D der Rest eines Mono- oder Disazofarbstoffes ist.

8. Reaktivfarbstoffe gemäss Anspruch 6, worin D der Rest eines Metallkomplexazo- oder Formazanfarbstoffes ist.

9. Reaktivfarbstoffe gemäss Anspruch 6, worin D der Rest eines Anthrachinon- oder Phthalocyaninfarbstoffes ist.

10. Reaktivfarbstoffe gemäss Anspruch 8, worin D der Rest eines Metallkomplexazofarbstoffes der Benzol- oder Naphthalinreihe ist.

11. Reaktivfarbstoffe gemäss Anspruch 10, worin D der Rest eines 1:1-Kupferkomplexazofarbstoffes der Benzol- oder Naphthalinreihe ist, und das Kupferatom an jeweils eine metallisierbare Gruppe in ortho-Position zur Azobindung gebunden ist.

12. Reaktivfarbstoffe gemäss Anspruch 7, der Formel

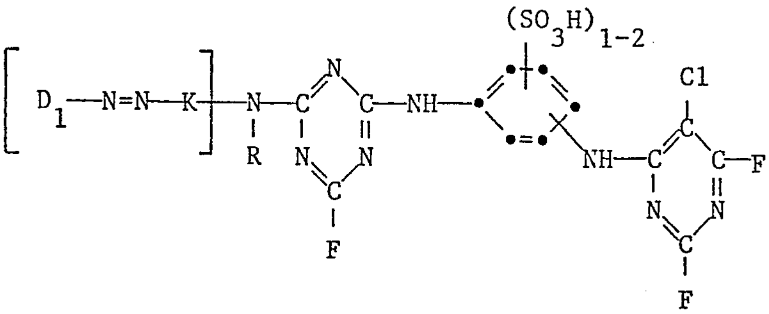

(3) ,

worin $D_1$ der Rest einer Diazokomponente der Benzol- oder Naphthalinreihe, K der Rest einer Kupplungskomponente der Benzol- oder Naphthalinreihe oder der heterocyclischen Reihe und R Wasserstoff oder Methyl ist, und der Reaktivrest an die Diazokomponente oder an die Kupplungskomponente gebunden ist.

13. Verfahren zur Herstellung von Reaktivfarbstoffen gemäss Anspruch 1, dadurch gekennzeichnet, dass man einen organischen Farbstoff der Formel

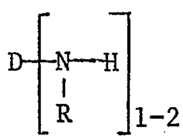

(4)

oder ein Farbstoffvorprodukt, 2,4,6-Trifluor-s-triazin, eine Verbindung der Formel

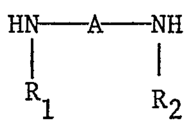

(5)

und 2,4,6-Trifluor-5-chlorpyrimidin kondensiert, wobei D, R, $R_1$, $R_2$ und A in den oben genannten Formeln die in Anspruch 1 angegebenen Bedeutungen haben, und dass man im Falle der Verwendung von Farbstoffvorprodukten, die erhaltenen Zwischenverbindungen in die gewünschten Endfarbstoffe umwandelt.

14. Verwendung der Reaktivfarbstoffe gemäss Anspruch 1, zum Färben und Bedrucken.

15. Verwendung gemäss Anspruch 14 zum Färben von Cellulosefasern.

16. Die gemäss Anspruch 13 erhältlichen Reaktivfarbstoffe.

17. Das gemäss Anspruch 14 gefärbte oder bedruckte Material, insbesondere Textilmaterial.

18. Das gemäss Anspruch 15 gefärbte oder bedruckte Material, insbesondere Textilmaterial.